# EUROPÄISCHE PATENTANMELDUNG

(11) **EP 3 151 248 A1**
(43) Veröffentlichungstag der Anmeldung: **05.04.2017**
(21) Anmeldenummer: 15187593.7
(22) Anmeldetag: 30.09.2015
(51) Int. Cl.: H01B 3/04, H02K 3/34

(54) **ISOLIERUNGSSYSTEM FÜR EINE ELEKTRISCHE MASCHINE**

(71) Anmelder: Siemens Aktiengesellschaft, 80333 München (DE)
(72) Erfinder: Mashkin, Andrey, 50672 Köln (DE); Brockschmidt, Mario, 45131 Essen (DE); Pohlmann, Friedhelm, 45355 Essen (DE)

(57) **Zusammenfassung**

Die Erfindung betrifft ein Isolierungssystem (1, 100) mit einem Glimmerband (101), das halbüberlappend um ein elektrisches Leitelement angeordnet ist, wobei auf dem Glimmerband (101) Bandpartikel (108) angeordnet sind, die sich nach einem Tränkvorgang vom Glimmerband (101) lösen und in Hohlräume diffundieren.

## Beschreibung

Die Erfindung betrifft ein Isolierungssystem eines elektrischen Leitelements einer elektrischen Maschine, wobei das Isolierungssystem ein Glimmerband aufweist, welches mit einer Vielzahl an Wicklungen um das elektrische Leitelement derart gewickelt ist, dass die Wicklungen halb überlappend angeordnet sind.

Desweiteren betrifft die Erfindung ein Verfahren zur Herstellung eines Isoliersystems eines elektrischen Leitelements einer elektrischen Maschine, wobei das Isolierungssystem mit einem Glimmerband ausgebildet wird, wobei das Glimmerband mit einer Vielzahl an Wicklungen um das elektrische Leitelement derart gewickelt wird, dass die Wicklungen halb überlappend angeordnet sind.

Isolierungssysteme sind aus dem Stand der Technik gut bekannt. Mittels der Isolierungssysteme werden an elektrischen Maschinen, wie beispielsweise Turbogeneratoren, aber teilweise auch Generatoren oder anderen Motoren, elektrisch leitende Leitelemente, wie etwa Generatorwicklungsstäbe aus Kupfer, isoliert. Diese elektrischen Leitelemente sind in einem Grundkörper eines Stators einer elektrischen Maschine isoliert gehaltert und bilden dabei im Wesentlichen die eigentliche Statorwicklung aus. In der Regel umfasst der Grundkörper hierzu ein geerdetes Blechpaket, welches eine Vielzahl an Nuten bereitstellt, in welchen die elektrischen Leitelemente festgelegt sind. Im Betrieb liegen an einer derartigen Statorwicklung extrem hohe Potentiale im zweistelligen Kilovoltbereich an. Die elektrisch leitenden Leitelemente müssen daher mit einem entsprechend ausgebildeten Isolierungssystem gegenüber diesem Blechpaket isoliert werden. Hierzu umfasst das Isolierungssystem eine Hauptisolierung mit einer Hauptisolierungsschicht aus einem oder mehreren Bandmaterialstreifen, welche in mehreren Lagen um das jeweilige elektrische Leitelement gewickelt sind. Darüber hinaus umfasst das Isolierungssystem noch eine weiter innen angeordnete Potentialsteuerungsschicht sowie eine weiter außen angeordnete Außenglimmschutzschicht und eine ebenfalls weiter außen angeordnete Endenglimmschutzschicht. Auch die innere Potentialsteuerungsschicht, die Außenglimmschutzschicht und die Endenglimmschutzschicht bestehen aus um das Leitelement gewickelten Bandmaterialstreifen. Die innenliegende Potentialsteuerungsschicht und die außenliegende Außenglimmschutzschicht dienen der Abschirmung gegen Hohlräume und Ablösung. Die elektrische Spannung wird in der Hauptisolierungsschicht, ausgehend von der inneren Potentialsteuerungsschicht in radialer Richtung bis zur Außenglimmschutzschicht abgebaut, wodurch sichergestellt ist, dass das elektrische Feld nur im Inneren der Hauptisolierungsschicht verbleibt und keine Teilentladungen zwischen der Hauptisolierungsschicht und dem geerdeten Blechpaket entstehen. Zur axialen Steuerung des elektrischen Feldes an den axialen Enden der Außenglimmschutzschicht ist die schwächer leitfähige Endenglimmschutzschicht appliziert, welche mit der Außenglimmschutzschicht elektrisch verbunden ist.

Wie bereits erwähnt, werden in der Regel alle vorgenannten Schichten des Isolierungssystems schichtweise aus Bandmaterialstreifen hergestellt, welche jeweils vornehmlich halb überlappend um das elektrische Leitelement gewickelt und mit Harz getränkt werden. Die genannte halbüberlappende Anordnung der einzelnen Wicklungen des jeweiligen Bandmaterialstreifens garantiert zum einen eine gute axiale wie auch radiale Verbindung der Wicklungen in den leitfähigen Lagen sowie möglichst lange Erosionspfade in der Hauptisolierungsschicht. Hierdurch kann eine sehr lange Lebensdauer garantiert werden.

Die Bandmaterialstreifen der Hauptisolierungsschicht enthalten hierbei isolationswirkende Glimmerpartikel, während die Bandmaterialstreifen der übrigen Schichten mit verschiedenen halb- und/oder leitfähigen Partikeln dotiert sind. Ein derartig aufgebautes Isoliersystem hat sich gut bewährt. Jedoch ist es nachteilig, dass in der Hauptisolierungsschicht in den Überlappungsbereichen Fehlgebiete entstehen, welche überwiegend nur mit Harz und weniger mit den isolationswirkenden Glimmerpartikeln ausgefüllt sind. Diese so ausgebildeten Hauptisolationsschicht-Fehlgebiete unterscheiden sich von den übrigen Hauptisolationsschicht-Gebieten, in welchen ein ordnungsgemäßes Harz-Glimmerpartikel-Gemisch vorliegt, durch eine geringere elektrische Festigkeit. Die Fehlgebiete erfahren aber aufgrund der im Vergleich zu dem ordnungsgemäßen Harz-Glimmerpartikel-Gemisch geringeren Permittivität eine höhere Feldbelastung. Deshalb sollen solche Fehlgebiete möglichst vermieden werden.

Neben der elektrischen Isolierung übernehmen die Isolierungssysteme auch die Aufgabe des Wärmetransports und sind zugleich mechanischen Wechselbeanspruchungen ausgesetzt.

Es werden Isolierungssysteme eingesetzt, bei denen Glimmerbänder zum Einsatz kommen, welche mit einer 49%igen Überlappung um einen Leiter spiralförmig gewickelt werden. Solch eine Wickeltechnik hat sich etabliert. Die Glimmerbänder umfassen ein Trägermaterial wie z. B. ein Glasgewebe und eine Glimmerpapierlage, die mit Hilfe eines Bindeharzes auf dem Trägermaterial befestigt wird. Die Glimmerbänder können vor der Aufbringung auf einen Generatorstab oder danach mit einem Tränkharz imprägniert werden. Die dann fertige Isolierung umfasst dann ein Imprägnierharz mit eventuellen Zusatzstoffen, dem Glimmer und dem Bandträgermaterial, wobei der Glimmeranteil dominiert.

Glimmer als Füllstoff weist eine sehr hohe Teilentladungsresistenz und sehr hohe Wärmeleitfähigkeiten auf und ist in der fertigen Isolierung lagenweise angeordnet. An den Überlappungen der Glimmerbänder entsteht jedoch immer ein Raum, in dem nur das Tränkharz vorhanden ist. Desweitern können kleine Falten in der Isolierung entstehen, welche sonst ebenfalls nur mit Tränkharz gefüllt sind und somit glimmerfrei Volumen in der Isolierung darstellen.

Nachteilig ist hierbei, dass durch das Fehlen von teilentladungsresistentem Glimmer oder Glas ein Entladungskanal leicht propagieren könnte. Desweiteren ist die Permittivität des Glimmers des Glases höher als die des Harzes, so dass das elektrische Feld sich in den Harzbereichen erhöht, was die Teilentladungsaktivität und den Entladungskanalwachstum beschleunigen kann. Darüber hinaus ist die Wärmeleitfähigkeit des Harzes geringer, so dass die Harzbereiche einen erhöhten Wärmewiderstand aufweisen, was sich negativ auf die Gesamtwärmeleitfähigkeit auswirkt. Desweiteren stellen diese Bereiche eine Inhomogenität dar aus einer mechanischen Sicht. Die mechanischen Spannungen sind dadurch im Material inhomogen verteilt und in den angrenzenden Bereichen könnte eine Spannungserhöhung bzw. ein Rissansatz hervorgerufen werden. Desweiteren könnte beim Vorhandensein von größeren Falten sich der Katalysatorgehalt reduzieren, da der Katalysator nur im Band enthalten ist. Dadurch kann das Tränkharz nicht so schnell gelieren und fließt aus der Falte heraus, was zu einem Hohlraum in der Isolierung führen kann.

Die oben genannten Probleme können durch dünnere Glimmerbänder mit flach ausgeformten Glasgewebeträgern ansatzweise gemildert werden. Durch diese Maßnahme wird das Volumen der einzelnen Harzbereiche reduziert und gleichzeitig die Materialdichte erhöht. Dies führt zu einem Effekt, bei dem das Durchtränkungsvermögen der Isolierung herabgesetzt wird. Die eigentlichen Harzbereiche bleiben jedoch bei diesem Ansatz in deren Teilentladungsresistenz, Wärmeleitfähigkeit und Permittivität unbeeinflusst.

Es ist Ausgabe der Erfindung eine bessere Isolierung für Generatoren und Motoren anzugeben.

Gelöst wird diese Ausgabe durch ein Isolierungssystem eines elektrischen Leitelementes einer elektrischen Maschine, wobei das Isolierungssystem ein Glimmerband aufweist, welches mit einer Vielzahl an Wicklungen um das elektrische Leitelement derart gewickelt ist, dass die Wicklungen halbüberlappend angeordnet sind, wobei das Glimmerband im Inneren und/oder auf dessen Oberfläche Bandpartikel aufweist, wobei die Bandpartikel vom Glimmerband mittels Tränkung mittels Imprägnierharz lösbar sind.

Die Aufgabe wird ebenso durch ein Verfahren zur Herstellung eines Isolierungssystems eines elektrischen Leitelementes einer elektrischen Maschine gelöst, wobei das Isolierungssystem mit einem Glimmerband ausgebildet wird, wobei das Glimmerband mit einer Vielzahl von Wicklungen um das elektrische Leitelement derart gewickelt wird, dass die Wicklungen halbüberlappend angeordnet sind, wobei das Glimmerband im Inneren und/oder auf dessen Oberfläche mit Bandpartikeln versehen wird, wobei die Bandpartikel nach einer Imprägnierung mit Imprägnierharz vom Glimmerband gelöst werden.

Mit der Erfindung wird der Ansatz verfolgt, eine Isolierung für Generatoren und Motoren vorzuschlagen, welche Partikel im Band aufweisen, die im Inneren des Glimmerbandes oder auf dessen Oberfläche angeordnet sind und erst in der späten Imprägnierphase sich vom Band lösen können. Durch diese Maßnahme können die Bandpartikel durch Eindringen des Imprägnierharzes nicht verschleppt werden während des eigentlichen Durchtränkvorgangs. Darüber hinaus wird erfindungsgemäß verhindert, dass die Bandpartikel nicht die für die Tränkung notwendigen Hohlräume in der Isolierung verstopfen. Die Bandpartikel lösen sich erst zum Ende oder nach der vollständigen Durchimprägnierung vom Band und verteilen sich dann in den mit Harz gefüllten Bereichen. Ein erfindungsgemäßer Effekt ist, dass eine oder mehrere Eigenschaften verändert werden. So wird beispielsweise die Permittivität erhöht, die Wärmeleitfähigkeit wird erhöht, die Teilentladungsresistenz wird erhöht sowie die mechanische Festigkeit wird erhöht.

Ein weiterer Aspekt der Erfindung ist, dass das Gelierverhalten beschleunigt wird, da die Bandpartikel als Keime für die Gelierung agieren und somit die Harzdralage, was einem Abfließen des Harzes gleichkommt aus den größeren Hohlräumen eliminiert wird.

Erfindungsgemäß wird dadurch die Gesamthomogenität der Isolierung verbessert.

Vorteilhafte Weiterbildungen sind in den Unteransprüchen angegeben.

So werden in einer ersten vorteilhaften Weiterbildung die Bandpartikel mittels eines niedermolekularen Binders an das Glimmerband angebunden.

Die gewünschte Anbindung der Bandpartikel kann durch Funktionalisierung der Oberfläche und durch den Einsatz von einem niedermolekularen Binder zu deren Einbettung auf der Oberfläche oder in das Innere des Glimmerbandes erfolgen. Der niedermolekulare Binder ist derart ausgebildet, dass er nach einiger Zeit durch Einwirkung von Tränkharz sich auflöst.

In einer weiteren vorteilhaften Weiterbildung werden die Bandpartikel plättchenförmig ausgebildet.

Dadurch lassen sich die Bandpartikel parallel zur Bandoberfläche orientieren, was die Banddicke nicht wesentlich beeinflusst.

In alternativen Ausführungsformen können die Bandpartikel auch andere Formen und vor allem andere Größenverteilungen aufweisen, wobei neben monomodalen auch multimodale Größenverteilungen denkbar sind.

In einer weiteren vorteilhaften Weiterbildung weisen die Bandpartikel eine mit Glimmer vergleichbare Permittivität und/oder Teilentladungsresistenz und/oder Wärmeleitfähigkeit auf.

Vorteilhafterweise sollen nun die Bandpartikel zumindest eine mit Glimmer vergleichbare Permittivität und/oder Teilentladungsresistenz und/oder Wärmeleitfähigkeit aufweisen.

Es ist allerdings bekannt, dass die Konzentration der Bandpartikel in den Harzbereichen im Vergleich zu der Glimmerkonzentration im übrigen Bereich der Konzentrierung stark reduziert ist. Daher ist es besonders vorteilhaft, wenn die Bandpartikel ein im Vergleich zu Glimmer höhere Leitfähigkeit, höhe Teilentladungsresistenz und/oder höhere Permittivität aufweist. Mit dieser Maßnahme wird erreicht, dass bessere Eigenschaftswerte trotz der geringeren Bandpartikelkonzentration möglich sind.

In einer vorteilhaften Weiterbildung ist das Bandpartikelmaterial aus Metalloxyden wie Aluminiumoxid, Titanoxid oder auch Nitride wie Aluminiumnitrid oder Bornitrid ausgebildet.

In einer weiteren vorteilhaften Weiterbildung weist das Imprägnierharz Harzfüllpartikel auf. Dies führt zu dem Effekt, dass die Homogenität des Gesamtsystems noch weiter verbessert werden kann. Besonders günstig wäre es hierbei, wenn die Harzfüllpartikel über eine hohe Permittivität und/oder hohe Teilentladungsbeständigkeit und/oder hohe Wärmeleitfähigkeitswerte verfügten.

In der weiteren vorteilhaften Weiterbildung sind die Harzfüllpartikel, insbesondere in Zusammenarbeit mit den Bandpartikeln derart ausgebildet, dass eine Gelierung des Imprägnierbandes beschleunigt wird.

Vorzugsweise sollten die Harzfüllpartikel eine Größe besitzen, die eine Migration durch Bandlagen hindurch ermöglicht. In einer vorteilhaften Weiterbildung sollten die Harzfüllpartikel Abmessungen von 5nm bis 100nm, insbesondere 5nm bis 50nm aufweisen.

Vorteilhafterweise weisen die Harzfüllpartikel Metalloxide wie Aluminiumoxid, Titanoxid oder Bornitrid auf.

Gemäß einem Aspekt der Erfindung könnte das Band auch mit einem Harz imprägniert werden, welches im ausgehärteten Zustand eine Kristallinität oder Teilkristallinität aufweist und somit zur mechanischen, elektrischen und thermischen Homogenität der Isolierung beiträgt.

Ein weiterer Aspekt der Erfindung ist, dass unter Einsatz von leitfähigen Bandpartikeln oder Bandpartikeln mit leitfähig beschichteter Oberfläche sich nach dem gleichen Prinzip eine Homogenisierung der Glimmschutzsysteme realisieren lässt, wobei es hier in erster Linie auf Homogenisierung der elektrischen Leitfähigkeit ankommt. Die Bandfüllpartikel können eine Funktionalisierungsbeschichtung oder Beschleunigerbeschichtung aufweisen, welche die Gelierung beschleunigt. Um eine mögliche Harzinfektion vorzubeugen, kann ferner eine einseitige Beschichtung mit Bandfüllpartikeln und nur an der zum Leiter weisenden Bandoberfläche erfolgen.

Erfindungsgemäß werden somit eine Reduzierung von mechanischen, elektrischen und thermischen Inhomogenitäten in der Isolierung, sowie eine bessere, hohlraumfreie Anbindung der Isolierung an den Teilleiterverbund aus insbesondere für mechanische Integrität in evolventem und Wickelkopfbereich förderlich ist.

Desweitern ist durch die Erfindung eine höhere Wärmeleitfähigkeit sowie eine längere Lebensdauer der Isolierung erreichbar. Dadurch sind höhere Maschinenleistungen und größere Kupferquerschnitte bei gleicher Nutbreite möglich, was durch eine dünnere Isolierung mit verbesserten Eigenschaften möglich ist.

Gemäß einem Aspekt der Erfindung wird eine erhöhte Dichte an teilentladungsresistenten anorganischen Materialien in den Harzbereichen und insgesamt eine höhere Dichtehomogenität in der Isolierung erreicht, ohne dass dabei das Durchtränkungsvermögen der Isolierung nachteilig beeinflusst wird. Ein weiterer Aspekt der Erfindung ist, dass die Feldstärkeverteilung vergleichmäßigt wird.

Desweiteren wird erfindungsgemäß die Hohlraumfreiheit der Isolierung erreicht und zwar in den Bereichen die konstruktiv oder fertigungstechnisch nicht ohne Hohlräume gebaut werden können. Diese Hohlraumfreiheit wird durch die Beschleunigung der Gelierung des Tränkharzes in den unvermeidlichen Hohlräumen erreicht. Ein weitere Aspekt der Erfindung ist, dass trotz des leicht verringerten Harzgehaltes sich bei Einsatz der vorgeschlagenen Partikel die Verklebung verbessern lässt, wodurch die thermische Zügelfestigkeit mindestens erhalten oder sogar verbessert werden kann.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Gleiche Bauteile oder Bauteile mit gleicher Funktion sind dabei mit gleichen Bezugszeichen gekennzeichnet.

Es zeigen
- Figur 1: eine schematische Draufsicht eines Isoliersystems eines in einer Nut eines Ständerblechpakets eines Turbogenerators isoliert gehalterten elektrischen Leitelements,
- Figur 2: ein Zustand der Isolierung gemäß dem Stand der Technik,
- Figur 3: ein Zustand einer erfindungsgemäßen Isolierung,
- Figur 4: ein Zustand einer erfindungsgemäßen Isolierung,
- Figur 5: ein weiterer Zustand einer erfindungsgemäßen Isolierung.

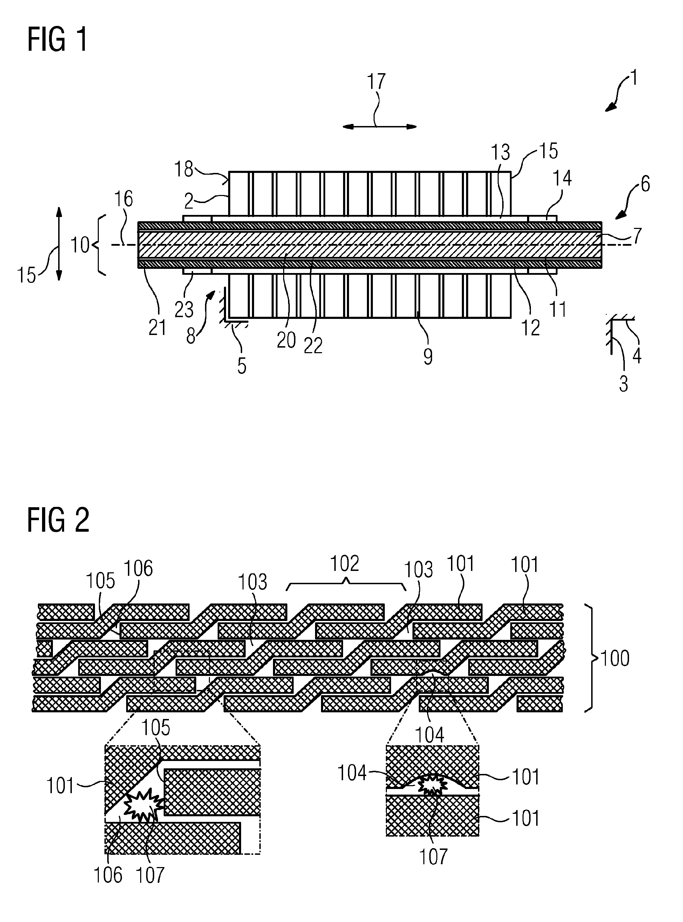

In Figur 1 ist ein Isoliersystem 1 zu sehen. Die Figur 1 zeigt beispielhaft ein Ständerblechpaket 2 eines an einer elektrischen Maschine 3 in Gestalt eines Turbogenerators 4 eingesetzten Stators 5. Das Isolierungssystem 1 dient dazu, ein elektrisches Leitelement 6 in Form eines Kupferstabelements 7 gegenüber dem Ständerpaket 2 zu isolieren. Das elektrische Leitelement 6 ist hierbei in Nuten 8 (nur exemplarisch gezeigt) des Ständerblechpakets 2 gehaltert. Das Ständerblechpaket 2 ist noch von einer Vielzahl an Kühlkanälen 9 durchzogen, um Wärme besser ableiten zu können.

Das Isolierungssystem 1 besteht aus einer Vielzahl an Isolierungssystem-Schichten 10, nämlich aus einer Innenpotentialsteuerungsschicht 11, aus einer Hauptisolationsschicht 12, aus einer Außenglimmschutzschicht 13 und aus einer Endenglimmschutzschicht 14, welche um das elektrische Leitelement 6 gewickelt sind.

In diesem Ausführungsbeispiel sind die Isolierungssystemschichten 10 in radialer Richtung 15 folgendermaßen angeordnet:
Ausgehend von einer Mittelachse 16 des zu isolierenden elektrischen Leitelementes 6 ist die Innenpotentialsteuerungsschicht 11 radial weiter innen direkt in axialer Richtung 17 bereichsweise auf das elektrische Leitelement 6 aufgewickelt, so dass die Innenpotentialsteuerungsschicht 11 bis über die Kopfseiten 18 bzw. 19 des Ständerblechpaket 2 übersteht. Die Innenpotentialsteuerungsschicht 11 ist in diesem Ausführungsbeispiel als innerer mit Harz (nicht beziffert) durchtränkter Bandmaterialstreifen 20 ausgeführt, der um das elektrische Leitelement 6 herumgewickelt ist.

Radial weiter außen ist die Hauptisolationsschicht 12 angeordnet, welche wiederum auf die radial weiter innen liegende Innenpotentialsteuerungsschicht 11 aufgewickelt ist. Die Hauptisolationsschicht 12 ist in diesem Ausführungsbeispiel dementsprechend als mittlere mit Harz (nicht beziffert) durchtränkte Bandmaterialstreifen 21 (nur exemplarisch beziffert) ausgeführt, die um die Innenpotentialsteuerungsschicht 11 herumgewickelt sind.

Radial noch weiter außen sind dann die Außenglimmschutzschicht 13 und die Endenglimmschutzschicht 14 angeordnet, welche in axialer Richtung 17 axial nebeneinander auf die radial weiter innenliegende Isolationsschicht 12 aufgewickelt sind. Sowohl die Außenglimmschutzschicht 13 als auch die Endenglimmschutzschicht 14 sind jeweils als äußere mit Harz (nicht beziffert) durchtränkte Bandmaterialstreifen 22 bzw. 23 erzeugt.

Figur 2 zeigt eine Ausführungsform eines Isolierungssystems 100 des elektrischen Leitelements 6 der elektrischen Maschine 2, wobei das Isolierungssystem 100 ein Glimmerband 101 aufweist. Aus Gründen der Übersichtlichkeit sind lediglich zwei Bezugszeichen 101 in der Figur dargestellt. Das Glimmerband 101 wird mit einer Wickeltechnik um das elektrische Leitelement 6 gewickelt. Dabei wird eine Wickeltechnik eingesetzt, bei der mit 49%iger Überlappung um den Leiter das Glimmerband 101 spiralförmig gewickelt wird. An den Überlappungen 102 der Glimmerbänder 101 entsteht ein Raum 103, in dem nur ein Tränkharz vorhanden ist. Auch entstehen produktionsbedingt kleine Falten 104 in der Isolierung, welche sonst ebenfalls nur mit Tränkharz gefüllt sind.

Die Figur 2 zeigt den Zustand gemäß dem Stand der Technik. Die Glimmerbandwicklung über eine Kante 105 des Glimmerbandes 101 aus der darunterliegenden Lage bewirkt das Entstehen von kritischen Hohlräumen 106 zwischen den Lagen, welche beim Tränken entweder nur mit Harz gefüllt sind, ohne Glimmerzusatz oder Luftblässchen enthalten.

Im linken unteren Teil der Figur 2 ist eine vergrößerte Darstellung eines Hohlraumes 106 dargestellt. In dem Hohlraum 106 kann ein Entladungskanal 107 entstehen. In diesem Entladungskanal 107 sind Teilentladungsaktivitäten möglich. Diese Teilentladungsaktivitäten sind unerwünscht, da sie das Isolierungssystem 100 langfristig zerstören. Im rechts unteren Teil der Figur 2 ist eine vergrößerte Darstellung einer Falte 104. In dieser Falte 104 ist ebenso ein Entladungskanal 107 möglich, wobei ebenfalls Teilentladungsaktivitäten in diesem Entladungskanal 107 möglich sind.

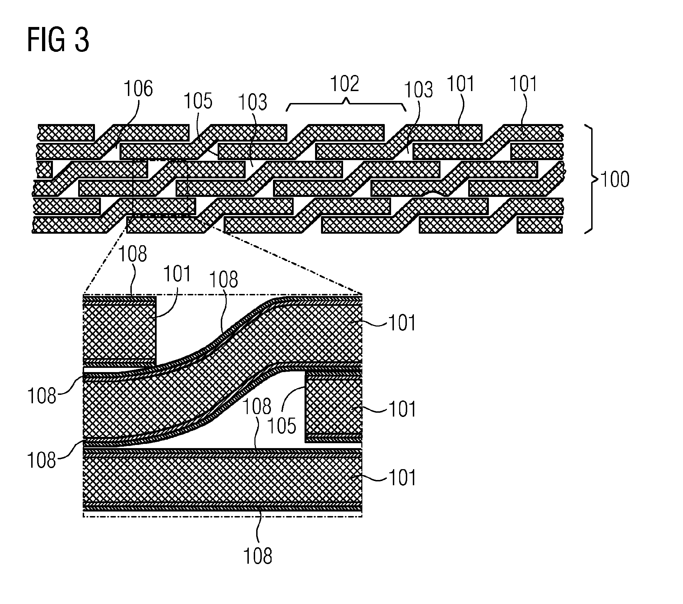

Die Figur 3 zeigt ein Isolierungssystem 100 gemäß der Erfindung.

Erfindungsgemäß wird das Glimmerband 101, welches mit einer Vielzahl an Wicklungen um das elektrische Leitelement 6 derart gewickelt ist, dass die Wicklungen halbüberlappend angeordnet ist, derart weitergebildet, dass das Glimmerband 101 im Inneren und/oder auf dessen Oberfläche Bandpartikel 108 aufweist. Die Bandpartikel 108 sind vom Glimmerband 101 mittels Tränkung mit Imprägnierharz lösbar.

Die Bandpartikel 108 werden mittels eines niedermolekularen Binders an das Glimmerband 101 angebunden.

Die Bandpartikel 108 sind plättchenförmig ausgebildet. Die Bandpartikel 108 weisen eine mit Glimmer vergleichbare Permittivität und/oder Teilentladungsresistenz und/oder Wärmeleitfähigkeit auf. Die Bandpartikel 108 weisen eine im Vergleich zu Glimmer höhere Wärmeleitfähigkeit, Teilentladungsresistenz und/oder Permittivität auf.

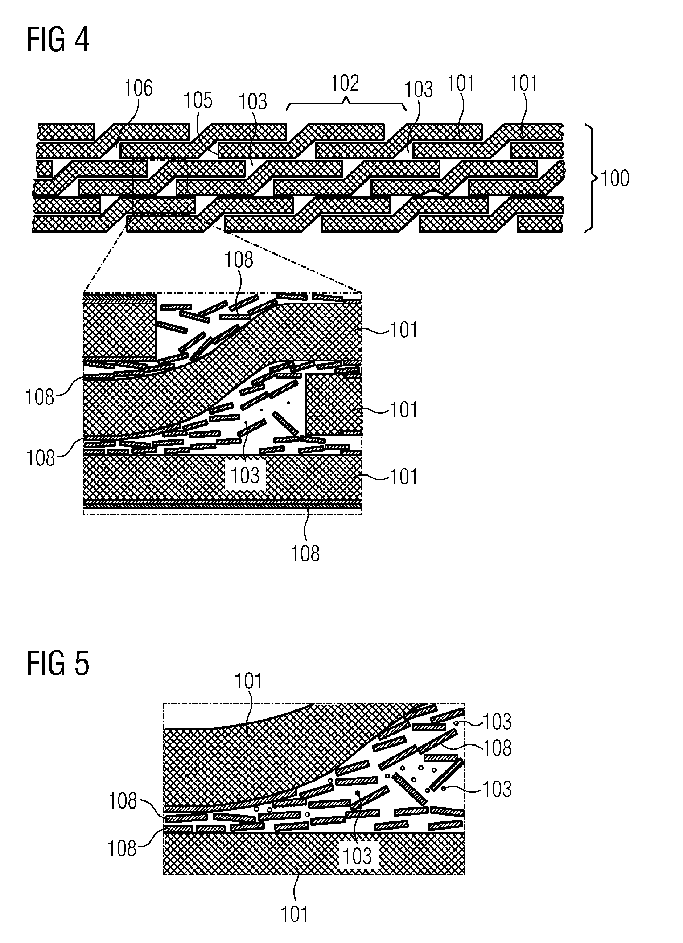

Die Bandpartikel weisen Metalloxide wie Aluminiumoxid, Titanoxid oder Nitride wie Aluminiumnitrid oder Bornitrid auf. Die Figur 4 zeigt den Zustand des Isolierungssystems 100 zu einem späteren Zeitpunkt. Die Bandpartikel 108 haben sich vom Glimmerband 101 gelöst und diffundieren in den Raum 103.

Die Figur 5 zeigt eine vergrößerte Darstellung des Isolierbandes und der Bandpartikel zu einem späteren Zeitpunkt. Erfindungsgemäß wird das Imprägnierharz mit Harzfüllpartikeln 109 ausgebildet.

Die Harzfüllpartikel 109, insbesondere in Zusammenarbeit mit den Bandpartikeln 108 beschleunigen die Gelierung des Imprägnierharzes.

Die Harzfüllpartikel 109 weisen Abmessungen von 5nm bis 100nm, insbesondere 5nm bis 50nm auf.

Die Harzfüllpartikel 109 weisen Metalloxide wie Aluminiumoxid, Titanoxid oder Bornitrid auf.

## Patentansprüche

1. Isolierungssystem (1, 100) eines elektrischen Leitelements einer elektrischen Maschine,
wobei das Isolierungssystem (1, 100) ein Glimmerband (101) aufweist, welches mit einer Vielzahl an Wicklungen um das elektrische Leitelement derart gewickelt ist,
dass die Wicklungen halbüberlappend angeordnet sind, **dadurch gekennzeichnet, dass**
das Glimmerband (101) im inneren und/oder auf dessen Oberfläche Bandpartikel (108) aufweist,
wobei die Bandpartikel (108) vom Glimmerband (101) mittels Tränkung mit Imprägnierharz lösbar sind.

2. Isolierungssystem (1, 100) nach Anspruch 1,
wobei die Bandpartikel (108) mittels eines niedermolekularen Binders an das Glimmerband (101) angebunden sind.

3. Isolierungssystem (1, 100) nach Anspruch 1 oder 2, wobei die Bandpartikel (108) plättchenförmig ausgebildet sind.

4. Isolierungssystem (1, 100) nach einem der vorhergehenden Ansprüche,
wobei die Bandpartikel (108) eine mit Glimmer vergleichbare Permittivität und/oder Teilentladungsresistenz und/oder Wärmeleitfähigkeit aufweist.

5. Isolierungssystem (1, 100) nach einem der Ansprüche 1 bis 3,
wobei die Bandpartikel (108) eine im Vergleich zu Glimmer höhere Wärmeleitfähigkeit, Teilentladungsresistenz und/oder Wärmeleitfähigkeit aufweist.

6. Isolierungssystem (1, 100) nach einem der vorhergehenden Ansprüche,
wobei die Bandpartikel (108) Metalloxide wie Aluminiumoxid, Titanoxid oder Nitride wie Aluminiumnitrid oder Boroxid aufweisen.

7. Isolierungssystem (1, 100) nach einem der vorhergehenden Ansprüche,
wobei das Imprägnierharz Harzfüllpartikel 109) aufweist.

8. Isolierungssystem (1, 100) nach Anspruch 7,
wobei die Harzfüllpartikel (109), insbesondere die Zusammenarbeit mit den Bandpartikeln (108), eine Gelierung des Imprägnierharzes beschleunigen.

9. Isolierungssystem (1, 100) nach Anspruch 7 oder 8, wobei die Harzfüllpartikel (109) Abmessungen von 5nm bis 100nm,
insbesondere 5nm bis 50nm aufweisen.

10. Isolierungssystem (1, 100) nach einem der Ansprüche 7 bis 9,
wobei die Harzfüllpartikel (109) Metalloxide wie Aluminiumoxid, Titanoxid oder Boroxid aufweist.

11. Verfahren zur Herstellung eines Isolierungssystems (1, 100) eines elektrischen Leitelements einer elektrischen Maschine (3),
wobei das Isolierungssystem (1, 100) mit einem Glimmerband (101) ausgebildet wird,
wobei das Glimmerband (101) mit einer Vielzahl an Wicklungen um das elektrische Leitelement derart gewickelt wird,
dass die Wicklungen halbüberlappend angeordnet sind, **dadurch gekennzeichnet, dass**
das Glimmerband (101) im inneren und/oder auf dessen Oberfläche mit Bandpartikeln (108) nach einer Imprägnierung mit Imprägnierharz vom Glimmerband (101) gelöst werden.
